# FASCICULE DE BREVET EUROPEEN

(11) **EP 2 652 379 B1**
(45) Date de publication et mention de la délivrance du brevet: **28.09.2016**
(21) Numéro de dépôt: 11797250.5
(22) Date de dépôt: 15.12.2011
(51) Int. Cl.: F16L 7/00, H02G 11/00, H02G 3/38, F16L 55/07, H02G 3/32

(54) **DISPOSITIF DE GUIDAGE ET DE MAINTIEN D'UN CABLE DANS UN CONDUIT**
VORRICHTUNG ZUM FÜHREN UND HALTEN EINES KABELS IN EINER ROHRLEITUNG
DEVICE FOR GUIDING AND HOLDING A CABLE WITHIN A PIPE

(30) Priorité: 16.12.2010 FR 1060665
(43) Date de publication de la demande: 23.10.2013
(73) Titulaire: Messier-Bugatti-Dowty, 78140 Vélizy-Villacoublay (FR)
(72) Inventeur: BLANPAIN, Thierry, F-78113 Conde Sur Vesgre (FR); CHAUVET, Dominique, 78140 Velizy-Villacoublay (FR)
(74) Mandataire: Parzy, Benjamin Alain
(86) Numéro de dépôt international: PCT/EP2011/072976
(87) Numéro de publication internationale: WO 2012/080426

(56) Documents cités:
- EP-A1- 0 399 123
- EP-A1- 2 246 867
- FR-A1- 2 893 695
- US-A- 4 250 927
- US-B1- 6 926 257

## Description

L'invention concerne un dispositif de guidage et de maintien d'un câble dans un conduit et plus particulièrement le passage et la fixation de câbles dans un atterrisseur.

### ARRIERE-PLAN DE L'INVENTION

Les atterrisseurs comportent un caisson articulé par une extrémité supérieure sur l'aéronef et un balancier monté pivotant sur une extrémité inférieure du caisson. Le balancier comporte au moins un essieu autour duquel tournent des roues et des capteurs de vitesse (tachymètres) pour mesurer la vitesse de rotation des roues. Les capteurs de vitesse sont disposés dans l'essieu et au plus près des roues. Les informations issues des capteurs de vitesse sont transmises à un organe de contrôle du freinage qui peut ainsi vérifier l'efficacité du freinage.

L'organe de contrôle du freinage et les capteurs de vitesse sont reliés électriquement par des câbles électriques qui cheminent de l'aéronef vers les capteurs en passant par le caisson puis le balancier et enfin par l'intérieur de l'essieu.

Les câbles électriques sont fixés sur le caisson par des colliers ou des supports fixés sur l'extérieur du caisson. Cependant, il est difficile de fixer les câbles électriques sur l'extérieur du balancier puis d'introduire ces câbles dans l'essieu. En effet, le balancier est une pièce complexe sur laquelle il est difficile de fixer des colliers.

Ainsi, les câbles électriques sont cheminés au travers du balancier afin de les protéger et de les amener par le plus court chemin vers les capteurs de vitesse disposés dans l'essieu. Ce cheminement est possible, car les pièces sont généralement creuses afin d'être les plus légères possible.

Toutefois, il est particulièrement difficile de fixer des supports ou des colliers de câble à l'intérieur de pièces creuses. En effet, percer et tarauder à l'intérieur d'une pièce est difficile et entraîne de surcroît une fragilisation de la pièce.

Le document US 4 250 927 décrit un dispositif de guidage destiné à être utilisé dans un avion, selon le préambule de la revendication 1.

Il en résulte que l'installation et la fixation de câbles dans une pièce creuse est particulièrement délicates.

L'invention propose ainsi un dispositif simple pour installer un câble dans un organe cylindrique et pour l'y fixer, sans endommager ni affaiblir ledit organe.

### BREVE DESCRIPTION DE L'INVENTION

L'invention concerne un dispositif de guidage d'un câble dans un conduit, caractérisé en ce que le dispositif comporte au moins un tube de guidage recevant le câble et au moins une bride expansible solidaire d'une extrémité du tube, la bride expansible venant se déployer pour se bloquer contre une paroi intérieure du conduit pour maintenir le tube dans le conduit selon la revendication 1.

La bride expansible permet de fixer dans le conduit un tube de guidage qui reçoit le câble sans endommager le conduit.

L'invention concerne également un procédé de guidage et de maintien d'un câble dans un conduit, le conduit comportant une entrée et un orifice de sortie du câble. Le procédé comporte les étapes de :
- introduire un tube dans le conduit de sorte qu'une extrémité amont du tube soit disposée à l'entrée du conduit et une extrémité aval soit disposée face à l'orifice de sortie ;
- introduire une bride expansible dans le conduit en solidarisant celle-ci au tube ;
- provoquer l'expansion de la bride pour la bloquer contre une paroi intérieure du conduit pour maintenir le tube dans le conduit ;
- introduire le câble dans le tube ;
- bloquer le câble sur de dispositif selon la revendication 6.

### BREVE DESCRIPTION DES DESSINS

Il sera fait référence aux dessins annexés, parmi lesquels :
- la figure 1 est en vue en perspective d'un balancier comprenant un dispositif selon l'invention ;
- la figure 2 est une vue, en coupe et en perspective du balancier illustré en figure 1, laissant apparaître le dispositif selon l'invention ;
- la figure 3 est une vue en perspective de la partie amont du dispositif selon l'invention.

### DESCRIPTION DETAILLEE DE L'INVENTION

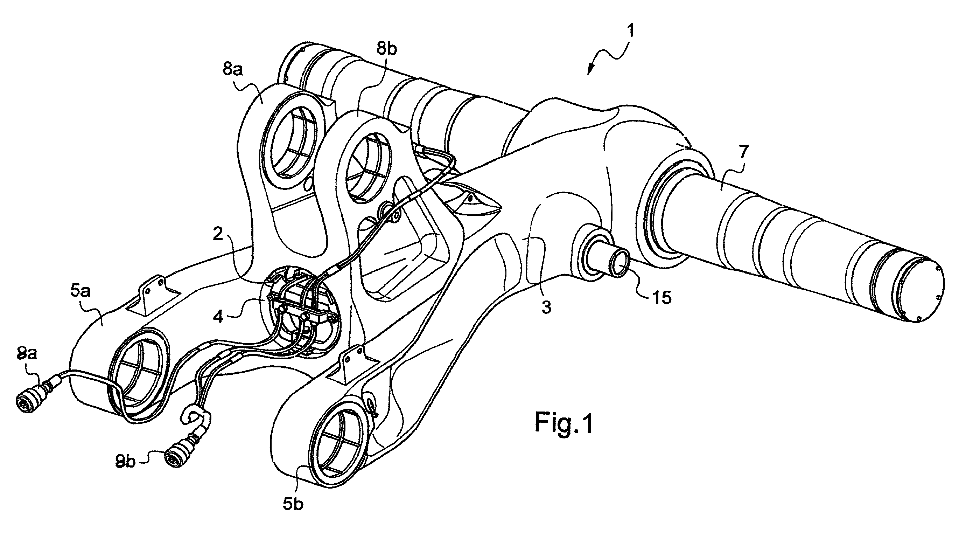

En référence à la figure 1 qui illustre un balancier 1 comportant un dispositif 2 selon l'invention, le balancier 1 d'atterrisseur comporte un corps 3 creusé d'une cavité formant un conduit 4 sensiblement cylindrique qui s'étend dans le corps 3 sur toute sa longueur. Une partie amont du dispositif 2 est disposée à l'entrée du conduit qui est ici de section circulaire.

Le corps 3 est prolongé à une extrémité proximale par deux bras latéraux 5a et 5b formant chapes et permettant d'articuler le balancier 1 sur le caisson d'un atterrisseur. Pour supporter les roues, le balancier 1 comporte sur une extrémité distale du corps 3 des paliers recevant un essieu 7 creux qui reçoit à ses extrémités des tachymètres. Le corps 3 du balancier 1 comporte également deux bras 8a et 8b, formant chape pour recevoir à articulation l'extrémité d'amortisseur (non représenté) relié au caisson.

Des câbles 8a, 8b provenant de l'organe de contrôle de freinage sont introduits dans le conduit 4 afin d'être raccordés aux tachymètres disposés dans l'essieu 7.

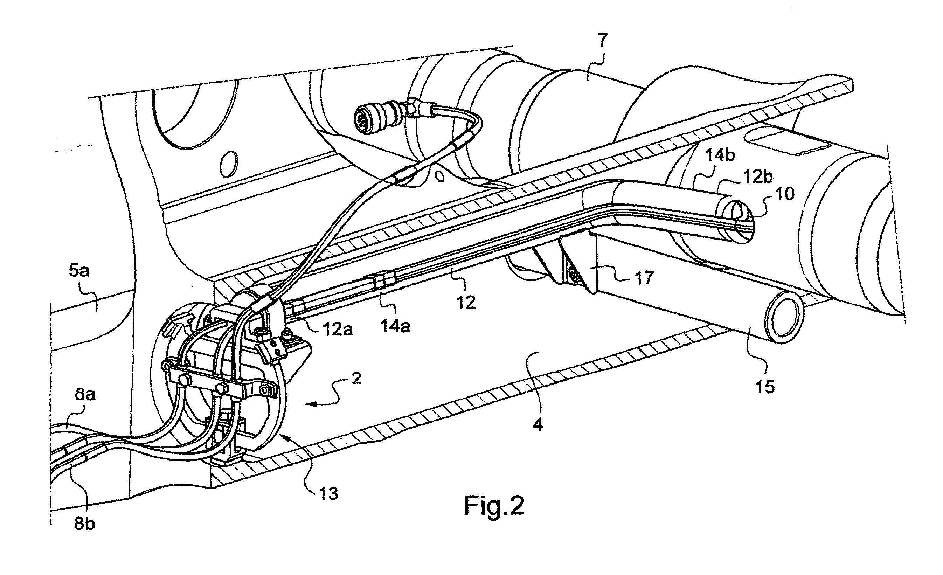

A cet effet, l'essieu 7 comporte un orifice 10, visible sur la figure 2, qui permet de faire communiquer le conduit 4 et l'intérieur de l'essieu 7 de sorte qu'il est possible aux câbles 8a, 8b de transiter directement de l'intérieur du corps 3 du balancier 1 à l'intérieur de l'essieu 7.

Selon l'invention, le balancier 1 comporte un dispositif 2 de guidage des câbles 8a, 8b disposé à l'intérieur du conduit 4, ce dispositif 2 permettant de guider les câbles 8a, 8b depuis l'entrée du conduit jusqu'à l'orifice 10 et de les maintenir fixement dans le conduit 4.

La figure 2 illustre le dispositif 2 selon l'invention disposé dans le conduit 4. Le dispositif comporte un tube de guidage 12 dont la première extrémité 12a est disposée à l'entrée du conduit et dont la deuxième extrémité 12b est disposée face à l'orifice 10. Le tube de guidage 12 est fixé, en un premier point de fixation, dans le conduit 4 au moyen d'une bride expansible 13 solidaire de la première extrémité 12a du tube.

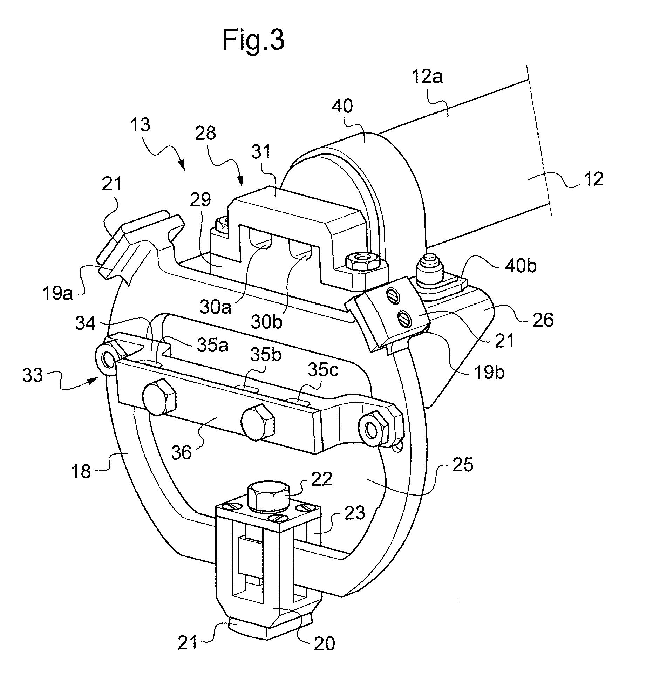

La bride expansible 13, illustrée plus particulièrement en figure 3, comporte un cadre 18 sur lequel sont fixés deux patins fixes 19a, 19b et un patin mobile 20. Chaque patin 19a, 19b, 20 comporte une semelle d'appui 21 en élastomère permettant à la bride 13 de s'appuyer sur la paroi intérieure du conduit 4. Le patin mobile 20 comporte une vis 22 engagée dans un filetage réalisé dans le cadre 18 et un coulisseau 23 monté coulissant sur le cadre de sorte que la rotation de la vis 22 écarte le coulisseau 23 vers l'extérieur du cadre 18. Ainsi, une fois la bride expansible 13 disposée dans le conduit 4, perpendiculairement à celui-ci, il suffit de tourner la vis 22 pour que le patin mobile 20 se déplace jusqu'à venir en contact et exercer une force sur la paroi intérieure du conduit 4. Les patins fixes 19a, 19b sont alors pressés contre la paroi intérieure, ce qui bloque la bride expansible 13 dans le conduit 4.

Les trois patins 19a, 19b, 21 sont répartis sur le cadre 18 de sorte à former un « Y »

Le cadre est en outre percé d'une ouverture centrale 25 permettant, une fois la bride 13 déployée dans le conduit 4, d'accéder à l'intérieur du conduit 4 par l'entrée du conduit 4 mais également de manoeuvrer la vis 22.

La bride expansible 13 comporte également une platine 26 fixée au cadre 18 et tournée vers l'intérieur du conduit 4. Le tube de guidage 12 est fixé sur la platine 26 au moyen d'une bride Ω 40 afin de solidariser le tube de guidage 12 et la bride expansible 13. La bride Ω 40 comporte un arceau venant enserrer la paroi extérieure du tube et deux pattes 40a et 40b qui sont fixées sur la platine 26 par des vis.

La bride expansible 13 comporte également des moyens pour immobiliser les câbles par rapport au dispositif.

Un premier moyen de blocage 28 est disposé sur la platine, devant la première extrémité 12a du tube de guidage 12. Ce premier moyen de blocage 28 comporte un socle 29 dans lequel sont ménagés deux encoches 30a et 30b et un pontet 31 recouvrant le socle 29 de manière à écraser les câbles disposés dans les encoches30a, 30b. Le socle 29 et le pontet 31 sont ensuite vissés entre eux et sur la platine 26 afin de bloquer les câbles 8a, 8b par rapport au tube de guidage 12.

Le deuxième moyen de blocage 33 des câbles est disposé sur le cadre 18. De manière semblable au premier moyen de blocage 28, le deuxième moyen 33 comporte une barrette de fixation 34 dans laquelle sont ménagée trois encoches 35a, 35b et 35c et une plaque 36 recouvrant la barrette 34 de manière à écraser les câbles 8a, 8b disposés dans les encoches 35a, 35b.

Un exemple de câbles bloqués par les moyens de blocage est illustré sur les figures 1 et 2.

Le conduit 4 est traversé latéralement par un toc 15 parallèle à l'essieu 7 et qui permet d'arrêter en rotation un organe de freinage des roues (non représenté). Le toc 15 est un obstacle au passage des câbles 8a, 8b dans le conduit. Selon un mode de réalisation de l'invention, le tube de guidage 12 est agencé pour permettre aux câbles 8a, 8b d'éviter le toc 15.

Le tube de guidage 12 comporte ainsi une première partie amont 14a, c'est-à-dire proche de l'entrée du conduit 4, rectiligne et une deuxième partie avale 14b coudée à la hauteur de la toc 15. La partie amont du tube est disposée au plus prés de la paroi intérieure du conduit 4 et la partie avale est orientée pour amener la deuxième extrémité du tube 12b face à l'orifice 10.

Le tube de guidage 12 comporte également un support 17 qui est vissé sur le toc 15 pour offrir un second point de fixation au tube de guidage 12.

Le cheminement des câbles 8a, 8b et la mise en place du dispositif 2 dans le conduit 4 est réalisé de la manière suivante.

La bride expansible 13, sans le deuxième moyen de blocage 33, et le tube de guidage 12 sont assemblés par vissage pour former le dispositif 2. Ce dernier est ensuite introduit dans le conduit 4, la bride expansible 13 venant se positionner à l'entrée du conduit 4. L'ouverture du cadre 25 de la bride expansible permet d'introduire une main ou des outils dans le conduit 4 afin de visser le support 17 du tube de guidage 12 sur le toc 15. La position du tube 12 au plus près de la paroi intérieure du conduit 4 permet en outre un meilleur accès au support 17 et au toc 15.

Bien entendu, il est également possible de fixer le tube 12 dans le conduit puis de rapporter la bride expansible 13 dans le conduit 4 avant de la fixer au tube 12.

Une fois le support 17 vissé sur le toc 15, le patin mobile 20 de la bride expansible 18 est déplacé afin de bloquer la bride 18 sur les parois intérieures du conduit4.

Lorsque le tube de guidage 12 est en position, les câbles 8a, 8b sont introduits dans le tube 12 qui va les guider jusqu'à l'orifice 10.

Les câbles 8a, 8b sont alors bloqués dans le premier moyen de blocage 28. Le deuxième moyen de blocage 33 est alors fixé sur le cadre 18 de la bride expansible 13 afin de bloquer les câbles 8a, 8b.

La présence sur la bride expansible 13 de deux moyens de blocage 28, 33 permet d'introduire dans le cheminement du câble une boucle pour éviter une trop grande tension des câbles lors des mouvements du balancier 1. Chaque câble 8a, 8b forme ainsi une boucle entre les deux moyens de blocage 28, 33.

Bien entendu, la réalisation de l'invention n'est pas limitée au mode de réalisation précédemment décrit.

En particulier, le dispositif 2 peut comporter plus d'une bride expansible 13. Dans le mode de réalisation décrit précédemment, le tube 12 est fixé sur le toc 15. Il est évidemment possible de remplacer ce deuxième point de fixation par une bride expansible 13.

La bride expansible peut comporter différents moyens de blocage dans le conduit qui ne sont pas limités à l'exemple décrit. Ces moyens peuvent comprendre des patins munis de ressorts pour exercer un effort sur la paroi intérieure du conduit ou des patins montés sur des cales biseautées...

La bride expansible 13 et en particulier le cadre 18 et les patins 19a, 19b, 20 peuvent être adaptés à la section du conduit 4. Par exemple, pour un conduit de section elliptique, le cadre 18 sera sensiblement elliptique et la bride 13 comportera quatre patins répartis à angle droit afin d'assurer la stabilité de la bride 13 dans le conduit 4.

De plus, les patins 19a, 19b, 20 peuvent comporter des semelles 21 rigides résistantes à l'usure. Il convient toutefois de noter qu'un des buts recherchés par l'invention étant de ne pas endommager le corps 3 du balancier 1, les semelles doivent être choisies pour ne pas rayer la paroi intérieure du conduit 4.

Le dispositif décrit est particulièrement adapté à un balancier 1 d'atterrisseur. Bien entendu, ce dispositif 2 peut être adapté à tous les organes creux nécessitant le cheminement d'un câble entre une entrée et un orifice de sortie.

## Revendications

1. Dispositif (2) de guidage d'un câble (8a, 8b) dans un conduit (4), le dispositif (2) comportant au moins un tube de guidage (12) destiné à recevoir un câble (8a, 8b) et au moins une bride expansible (13) solidaire d'une extrémité (12a) du tube (12), cette bride expansible (13) étant adaptée à se déployer pour se bloquer contre une paroi intérieure du conduit (4) pour maintenir le tube (12) dans le conduit (4), **caractérisé en ce que** la bride expansible (13) comporte un cadre (18) sur lequel le tube (12) est fixé, le cadre (18) portant au moins un patin (20), dont un patin monté mobile sur le cadre pour exercer une force sur la paroi du conduit (4).

2. Dispositif selon la revendication 1, dans lequel le cadre (18) comporte une ouverture centrale (25), le tube (12) étant relié au cadre de façon à pouvoir s'étendre sensiblement contre la paroi du conduit (4), de sorte que le dispositif (2) permet un accès à l'intérieur du conduit (4) au travers de la bride expansible (13).

3. Dispositif selon l'une des revendications 1 ou 2, dans lequel chacun des patins (19a, 19b, 20) comporte une semelle (21) en élastomère adaptée à venir en appui sur la paroi intérieure du conduit (4).

4. Dispositif selon l'une des revendications 1 à 3, dans lequel la bride expansible (13) comporte des moyens de blocage (28, 33) du câble (8a, 8b) par rapport au tube (12).

5. Atterrisseur d'aéronef comportant un conduit (4) équipé d'un dispositif selon l'une des revendications 1 à 4.

6. Procédé de guidage d'un câble (8a, 8b) utilisant le dispositif de guidage d'un câble selon la revendication 1 dans un conduit (4) comportant une entrée et un orifice de sortie (10) du câble, le procédé comprenant les étapes de :
- introduire un tube (12) dans le conduit (4) de sorte qu'une extrémité amont du tube (12a) soit disposée à l'entrée du conduit (4) et une extrémité avale (12b) soit disposée face à l'orifice de sortie (10) ;
- introduire une bride expansible (13) dans le conduit (4) en solidarisant celle-ci au tube (12) ;
- provoquer l'expansion de la bride (13) pour la bloquer contre une paroi intérieure du conduit (4) pour maintenir le tube (12) dans le conduit (4)
- introduire le câble (8a, 8b) dans le tube (12) ;
- bloquer le câble (8a, 8b) sur le dispositif à l'aide de moyens de blocage (28, 33) du câble (8a, 8b) par rapport au tube (12).

## Patentansprüche

1. Vorrichtung (2) zum Führen eines Kabels (8a, 8b) in einer Leitung (4), wobei die Vorrichtung (2) mindestens ein Führungsrohr (12) umfasst, das dazu bestimmt ist, ein Kabel (8a, 8b) aufzunehmen, sowie mindestens einen aufweitbaren Flansch (13), der fest mit einem Ende (12a) des Rohres (12) verbunden ist, wobei dieser aufweitbare Flansch (13) dazu geeignet ist, sich auszubreiten, um sich gegen eine Innenwand der Leitung (4) festzuklemmen, um das Rohr (12) in der Leitung (4) zu halten, **dadurch gekennzeichnet, dass** der aufweitbare Flansch (13) einen Rahmen (18) umfasst, an dem das Rohr (12) befestigt ist, wobei der Rahmen (18) mindestens eine Kufe (20) umfasst, darunter eine an dem Rahmen beweglich gelagerte Kufe, um eine Kraft auf die Wand der Leitung (4) auszuüben.

2. Vorrichtung nach Anspruch 1, wobei der Rahmen (18) eine zentrale Öffnung (25) umfasst, wobei das Rohr (12) mit dem Rahmen derart verbunden ist, dass es sich im Wesentlichen derart gegen die Wand der Leitung (4) ausbreiten kann, dass die Vorrichtung (2) einen Zugang ins Innere der Leitung (4) durch den aufweitbaren Flansch (13) ermöglicht.

3. Vorrichtung nach einem der Ansprüche 1 oder 2, wobei jede der Kufen (19a, 19b, 20) einen Belag (21) aus Elastomer umfasst, der dazu geeignet ist, an der Innenwand der Leitung (4) zur Anlage zu kommen.

4. Vorrichtung nach einem der Ansprüche 1 bis 3, wobei der aufweitbare Flansch (13) Blockiermittel (28, 33) zum Blockieren des Kabels (8a, 8b) in Bezug auf das Rohr (12) umfasst.

5. Luftfahrzeugfahrwerk, umfassend eine Leitung (4), die mit einer Vorrichtung nach einem der Ansprüche 1 bis 4 ausgestattet ist.

6. Verfahren zum Führen eines Kabels (8a, 8b), das die Vorrichtung zum Führen eines Kabels nach Anspruch 1 in einer Leitung (4) verwendet, die einen Eintritt und eine Austrittsöffnung (10) für das Kabel umfasst, wobei das Verfahren die Schritte umfasst:
- Einführen eines Rohres (12) in die Leitung (4) derart, dass ein stromaufwärtiges Ende des Rohres (12a) am Eintritt der Leitung (4) angeordnet ist und ein stromabwärtiges Ende (12b) gegenüber der Austrittsöffnung (10) angeordnet ist;
- Einführen eines aufweitbaren Flansches (13) in die Leitung (4) und dabei Befestigen desselben am Rohr (12);
- Bewirken der Aufweitung des Flansches (13), um ihn an einer Innenwand der Leitung (4) festzuklemmen, um das Rohr (12) in der Leitung (4) zu halten,
- Einführen des Kabels (8a, 8b) in das Rohr (12);
- Blockieren des Kabels (8a, 8b) an der Vorrichtung mit Hilfe von Blockiermitteln (28, 33) zum Blockieren des Kabels (8a, 8b) in Bezug auf das Rohr (12).

## Claims

1. Device (2) for guiding a cable (8a, 8b) within a duct (4), the device (2) comprising at least one guiding tube (12) intended to receive a cable (8a, 8b) and at least one expandable clamp (13) secured to one end (12a) of the tube (12), said expandable clamp (13) being adapted to enlarge to lock itself against an inner wall of the duct (4) to hold the tube (12) in place in the duct (4), **characterised in that** the expandable clamp (13) comprises a frame (18) to which the tube (12) is fixed, the frame (18) carrying at least one shoe (20), of which shoe or shoes one is mounted to be movable on the frame to exert a force on the wall of the duct (4).

2. Device according to claim 1, wherein the frame (18) comprises a central opening (25), the tube (12) being connected to the frame in such a way as to be able to extend substantially against the wall of the duct (4), the device (2) thus allowing access to the interior of the duct (4) through the expandable clamp (13).

3. Device according to either of claims 1 and 2, wherein each of the shoes (19a, 19b, 20) comprises a sole (21) made of elastomer which is adapted to come to bear against the inner wall of the duct (4).

4. Device according to one of claims 1 to 3, wherein the expandable clamp (13) comprises means (28, 33) for locking the cable (8a, 8b) relative to the tube (12).

5. Aircraft landing gear comprising a duct (4) fitted with a device (2) according to one of claims 1 to 4.

6. Method of guiding a cable (8a, 8b), using the device for guiding a cable according to claim 1, within a duct (4) comprising an entry point and an exit orifice (10) for the cable, the method comprising the steps of:
- introducing a tube (12) into the duct (4) in such a way that an upstream end (12a) of the tube is arranged at the entry point to the duct (4) and a downstream end (12b) is arranged facing the exit orifice (10),
- introducing an expandable clamp (13) into the duct (4) while securing the former to the tube (12),
- causing the clamp (13) to expand to lock it against an inner wall of the duct (4) to hold the tube (12) in place in the duct (12),
- introducing the cable (8a, 8b) into the tube (12),
- locking the cable (8a, 8b) to the device with the help of means (28, 33) for locking the cable (8a, 8b) relative to the tube (12).
